(19) Europäisches Patentamt
European Patent Office
Office européen des brevets

(11) **EP 2 955 082 B1**

(12) **EUROPÄISCHE PATENTSCHRIFT**

(45) Veröffentlichungstag und Bekanntmachung des Hinweises auf die Patenterteilung:
**10.01.2018 Patentblatt 2018/02**

(51) Int Cl.:
**B62D 7/15** *(2006.01)*      **B62D 15/02** *(2006.01)*

(21) Anmeldenummer: **15168642.5**

(22) Anmeldetag: **21.05.2015**

(54) **VERFAHREN ZUM REGELN EINER POSITION EINES KRAFTFAHRZEUGS MIT HINTERACHSLENKUNG, FAH-RERASSISTENZSYSTEM SOWIE KRAFTFAHRZEUG**

METHOD FOR CONTROLLING A POSITION OF A MOTOR VEHICLE WITH REAR AXLE STEERING, DRIVER ASSISTING SYSTEM AND MOTOR VEHICLE

PROCÉDÉ DE RÉGLAGE D'UNE POSITION D'UN VÉHICULE À L'AIDE D'UNE DIRECTION D'ESSIEU ARRIÈRE, SYSTÈME D'ASSISTANCE AU CONDUCTEUR ET VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.05.2014 DE 102014107309**

(43) Veröffentlichungstag der Anmeldung:
**16.12.2015 Patentblatt 2015/51**

(73) Patentinhaber: **Valeo Schalter und Sensoren GmbH**
**74321 Bietigheim-Bissingen (DE)**

(72) Erfinder:
• **Ginglinger, Laurent**
  **68420 Eguisheim (FR)**
• **Heimberger, Marco**
  **74321 Bietigheim-Bissingen (DE)**

(56) Entgegenhaltungen:
**EP-A1- 2 243 687      DE-A1-102013 010 306**
**US-A1- 2011 087 405**

**Beschreibung**

Die vorliegende Erfindung betrifft ein Verfahren zum Regeln einer Position eines Kraftfahrzeugs mit Hinterachslenkung. Darüber hinaus betrifft die vorliegende Erfindung ein Fahrerassistenzsystem für ein Kraftfahrzeug. Schließlich betrifft die vorliegende Erfindung ein Kraftfahrzeug mit einem solchen Fahrerassistenzsystem.

Das Interesse richtet sich vorliegend insbesondere auf Kraftfahrzeuge, die eine Hinterachslenkung aufweisen. Dabei kann neben der Vorderachse auch die Hinterachse des Kraftfahrzeugs gelenkt werden. Dies kann auch als Hinterradlenkung oder als Allradlenkung bezeichnet werden. In diesem Zusammenhang sind Kraftfahrzeuge bekannt, bei denen ein gegenläufiges Einschlagen der Vorderräder und der Hinterräder ermöglicht werden kann. Dies bringt insbesondere bei niedrigen Fahrgeschwindigkeiten den Vorteil mit sich, dass das Kraftfahrzeug wendiger wird. Darüber hinaus kann es insbesondere bei höheren Fahrgeschwindigkeiten vorgesehen sein, dass die Vorderräder und die Hinterräder gleichläufig, also in die gleiche Richtung, gelenkt werden. Auf diese Weise kann die Fahrstabilität erhöht werden.

Die DE 10 2013 010 306 A1 beschreibt ein Verfahren zum Betrieb einer Hinterachslenkung eines Kraftfahrzeugs. Hierbei wird die Hinterachslenkung erst aktiviert, wenn eine aktuelle Fahrzeuggeschwindigkeit einen vorgegebenen ersten Geschwindigkeitswert unterschreitet. Damit kann ermöglicht werden, dass die Hinterachslenkung bei ausreichend geringen Geschwindigkeiten automatisch zur Verfügung steht und bei höheren Fahrzeuggeschwindigkeiten sichergestellt ist, dass die Hinterradlenkung nicht aktiv ist und das Fahrverhalten des Fahrzeugs nicht beeinflusst.

Ein Verfahren und eine Vorrichtung zur Unterstützung eines Einpark- und Ausparkvorganges in eine Längsparklücke für ein Fahrzeug mit Allradlenkung sind in der DE 10 2011 010 370 A1 offenbart. Hierbei wird bei einem Einparkvorgang unter Berücksichtigung eines erfassten Fahrzeugumfelds ein maximaler Vorderachslenkwinkel, bis zu welchem eine Lenkbewegung durchführbar ist, vorgegeben und ein von einem Ist-Vorderachslenkwinkel abhängiger Hinterachslenkwinkel ermittelt und eingestellt, so dass sich ein Heck des Fahrzeuges während des gesamten Einparkvorganges innerhalb eines für eine Geradeausfahrt vorgegebenen Fahrbahnbereiches befindet.

Ferner ist in der EP0678439A1 beschrieben, dass bei der Hinterradlenkung die Hinterräder normalerweise immer etwas entgegen den Vorderrädern ausgelenkt werden, so dass sich das Fahrzeug kinematisch entsprechend einem Fahrzeug mit kürzerem Radstand und unlenkbaren Hinterrädern verhält. Dieses kann jedoch zu dem Problem führen, dass, falls der Fahrer mit dem Fahrzeug parallel und mit geringem Abstand zu einer Bordsteinkante anhalten soll, beim nachfolgendem Start die Hinterräder die Bordsteinkante überrollen würden, wenn der Fahrer die Vorderräder stärker in eine von der Bordsteinkante wegweisende Richtung einschlagen sollte.

Aus diesem Grund ist in der EP0678439A1 bei Fahrzeugen mit im Vergleich zur Fahrzeuglänge langem Radstand und lenkbaren Hinterrädern vorgesehen, dass die Hinterradlenkung automatisch oder manuell auf eine besondere Betriebsweise einstellbar ist, bei der während einer Fahrphase nach einem Halt oder einer Unterschreitung einer geringen Mindestgeschwindigkeit des Fahrzeuges bei willkürlicher Auslenkung der Vorderräder aus einer Geradeausstellung oder einer dazu benachbarten Stellung das jeweils kurvenaußenseitige Hinterrad zunächst auf einer Spur läuft, die die beim Halt bzw. bei Unterschreitung der Mindestgeschwindigkeit vorliegenden Radaufstandsbereiche von Vorderrad und Hinterrad auf der kurvenäußeren Fahrzeugseite etwa geradlinig verbindet oder kurveninnenseitig einer die genannten Radaufstandsbereiche verbindenden geraden Linie verläuft.

Des Weiteren sind aus dem Stand der Technik Fahrerassistenzsysteme bekannt, welche beim Manövrieren des Kraftfahrzeugs eingreifen. Derartige Fahrerassistenzsysteme können beispielsweise dafür verwendet werden, um einen Fahrer beim Einparken des Kraftfahrzeugs zu unterstützen. In diesem Zusammenhang sind Fahrerassistenzsysteme bekannt, mit welchen das Kraftfahrzeug semi-autonom manövriert wird. In diesem Fall übernimmt das Fahrerassistenzsystem die Lenkung des Kraftfahrzeugs und der Fahrer betätigt das Gaspedal und die Bremse. Ferner sind bereits Fahrerassistenzsysteme bekannt, die ein autonomes Manövrieren des Kraftfahrzeugs ermöglichen. EP 2 243 687 A1 beschreibt ein Verfahren zur Regelung einer Position eines Kraftfahrzeugs mit einer Hinterachslenkung, mit den Schritten:- Vorgeben einer Fahrtrajektorie für das Kraftfahrzeug,- Bereitstellen eines ersten Referenzpunktes des Kraftfahrzeugs, welcher sich mittig auf einer Hinterachse des Kraftfahrzeugs befindet,- Bereitstellen eines Modells, welches eine Bewegung des Kraftfahrzeugs in Abhängigkeit von einem Vorderradlenkwinkel der Vorderräder des Kraftfahrzeugs unter Verwendung des ersten Referenzpunktes beschreibt,- Bestimmen eines zweiten Referenzpunktes durch Verschieben des ersten Referenzpunktes um einen Abstand, und- Regeln der Position des Kraftfahrzeugs entlang der Fahrtrajektorie unter Verwendung des Modells für den zweiten Referenzpunkt. Wenn das Kraftfahrzeug zumindest semi-autonom manövriert wird, wird üblicherweise eine Fahrtrajektorie vorgegeben bzw. ermittelt, auf weicher sich das Kraftfahrzeug ausgehend von seiner aktuellen Startposition zu einer Zielposition bewegen soll. Bei Kraftfahrzeugen mit Hinterachslenkung gestaltet sich die Bestimmung der Fahrtrajektorie im Vergleich zu Kraftfahrzeugen mit reiner Vorderachslenkung jedoch deutlich aufwändiger.

Es ist Aufgabe der vorliegenden Erfindung, eine Lösung aufzuzeigen, wie ein Kraftfahrzeug mit Hinterachslenkung der eingangs genannten Gattung einfacher manövriert werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren zur Regelung einer Position eines Kraftfahrzeugs mit einer Hinterachslenkung umfasst das Vorgegeben einer Fahrtrajektorie für das Kraftfahrzeug, das Bereitstellen eines ersten Referenzpunktes des Kraftfahrzeugs, welcher sich mittig auf einer Hinterachse des Kraftfahrzeugs befindet, das Bereitstellen eines Modells, welches eine Bewegung des Kraftfahrzeugs in Abhängigkeit von einem Vorderradlenkwinkel der Vorderräder des Kraftfahrzeugs unter Verwendung des ersten Referenzpunktes beschreibt, das Bestimmen eines zweiten Referenzpunktes durch Verschieben des ersten Referenzpunktes um einen Abstand, und das Regeln der Position des Kraftfahrzeugs entlang der Fahrtrajektorie unter Verwendung des Modells für den zweiten Referenzpunkt.

Der Erfindung liegt die Erkenntnis zugrunde, dass durch den Einfluss der Hinterachslenkung die Achslänge des Kraftfahrzeugs, also der Abstand zwischen Vorderachse und Hinterachse virtuell verändert wird. Wenn die Hinterräder gegenläufig zu den Vorderrädern eingelenkt werden, also die Vorderräder und die Hinterräder in entgegengesetzte Richtungen gelenkt werden, wird die Achslänge virtuell verkürzt. Die Hinterachse wird also virtuell zu der Vorderachse hin verschoben. Das Kraftfahrzeug verhält sich beim Lenken wie ein Kraftfahrzeug mit kürzerem Achsabstand bzw. Radstand. Falls die Hinterräder gleichläufig zu den Vorderrädern eingelenkt werden, also die Vorderräder und die Hinterräder in die gleiche Richtung gelenkt werden, wird die Achslänge virtuell verlängert. Die Hinterachse wird folglich virtuell von der Vorderachse weg verschoben. Das Kraftfahrzeug verhält sich beim Lenken wie ein Kraftfahrzeug mit längerem Achsabstand bzw. Radstand.

Vorliegend wird ein bekanntes Modell, welches die Bewegung des Kraftfahrzeugs unter Berücksichtigung der Vorderradlenkwinkel beschreibt, verwendet werden, um die Bewegung eines Kraftfahrzeugs mit Hinterachslenkung zu beschreiben. Dieses Modell ist ein lineares Einspurmodell Somit muss für die Beschreibung der Bewegung kein neues Modell erstellt werden. Zudem weist das Modell eine geringe Komplexität auf, da nur der Einfluss der Vorderachslenkung berücksichtigt wird.

Bevorzugt wird der zweite Referenzpunkt durch Verschieben des ersten Referenzpunktes entlang einer Längsachse des Kraftfahrzeugs bestimmt. Durch das Verschieben des Referenzpunktes entlang der Fahrzeuglängsachse kann die Hinterachse virtuell verschoben werden. Somit kann das Kraftfahrzeug während der Positionsregelung wie ein Kraftfahrzeug ohne Hinterachslenkung behandelt werden.

Weiterhin ist es vorteilhaft, wenn der Abstand des zweiten Referenzpunktes zu dem ersten Referenzpunkt in Abhängigkeit von maximalen Hinterradlenkwinkeln der Hinterräder des Kraftfahrzeugs bestimmt wird. Dabei kann ein erster maximaler Hinterradlenkwinkel, der eine maximal mögliche Auslenkung der Hinterräder in eine ersten Richtung beschreibt, und ein zweiter maximaler Hinterradlenkwinkel, der eine maximal mögliche Auslenkung der Hinterräder in eine zweite Richtung beschreibt, berücksichtigt werden. Anhand der maximalen Hinterradlenkwinkel kann der maximale Abstand, um den der zweite Referenzpunkt bezüglich des ersten Referenzpunktes verschoben wird, ermittelt werden.

In einer Ausführungsform wird der Abstand des zweiten Referenzpunktes zu dem ersten Referenzpunkt zusätzlich in Abhängigkeit von maximalen Vorderradlenkwinkeln der Vorderräder des Kraftfahrzeugs bestimmt. Auch hier kann ein erster maximaler Vorderradlenkwinkel, der eine maximal mögliche Auslenkung der Vorderräder in eine erste Richtung beschreibt, und ein zweiter maximaler Vorderradlenkwinkel, der eine maximal mögliche Auslenkung der Vorderräder in eine zweite Richtung beschreibt, berücksichtigt werden. Auch die maximalen Vorderradlenkwinkel können herangezogen werden, um den virtuellen Achsabstand und somit Abstand, um den der zweite Referenzpunkt bezüglich des ersten Referenzpunktes verschoben ist, zu bestimmen.

Bevorzugt wird der Abstand des zweiten Referenzpunktes zu dem ersten Referenzpunkt anhand eines Schnittpunktes einer Linie mit der Längsachse des Kraftfahrzeugs bestimmt, wobei die Line durch Schnittpunkte von Geraden, welche die maximalen Vorderradlenkwinkel beschreiben und welche durch einen Mittelpunkt der Vorderachse des Kraftfahrzeugs verlaufen, und Geraden, welche die maximalen Hinterradlenkwinkel beschreiben und welche durch den ersten Referenzpunkt verlaufen, bestimmt. Somit kann anhand der bekannten mechanischen Ausgestaltung der Vorderachslenkung und der Hinterachslenkung durch einfache geometrische Zusammenhänge der Abstand ermittelt werden.

In einer bevorzugten Ausführungsform wird die Fahrtrajektorie in eine Mehrzahl von Bereichen eingeteilt, für jeden Bereich der Mehrzahl von Bereichen wird der Abstand von dem zweiten Referenzpunkt zu dem ersten Referenzpunkt ermittelt und für jeden der Bereiche wird anhand des ermittelten Abstands ein Bahnsegment bestimmt. Die Fahrtrajektorie kann sich dabei von einem Startpunkt zu einem Zielpunkt erstrecken. Bereiche, welche abschnittsweise einen ähnlichen Verlauf bzw. eine ähnliche Formgebung aufweisen, können einen Bereich bilden. Für jeden Bereich kann ein Abstand bestimmt werden, der für diesen Bereich konstant ist. Anhand des jeweiligen Abstands kann für jeden Bereich ein Bahnsegment bestimmt werden. Das Kraftfahrzeug kann dann der Reihe nach entlang der einzelnen Bahnsegmente gelenkt werden.

Zudem ist es vorteilhaft, wenn die jeweiligen Bahnsegmente derart bestimmt werden, dass diese eine Form einer Geraden, eines Kreisbogens, einer Ellipsenbahn und/oder einer Klothoide aufweist. Entlang derartiger Bahnsegmente kann das Kraftfahrzeug einfach gelenkt werden.

In einer Ausgestaltung werden zum Regeln der Position des Kraftfahrzeugs entlang der Fahrtrajektorie der aktuelle Vorderradlenkwinkel, der aktuelle Hinterradlenkwinkel und/oder eine aktuelle Geschwindigkeit des Kraftfahrzeugs erfasst. Der Vorderradlenkwinkel und der Hinterradlenkwinkel können mithilfe von entsprechenden Lenkwinkelsensoren ermittelt werden. Zur Bestimmung der Fahrzeuggeschwindigkeit kann zudem ein entsprechender Sensor, der beispielsweise die Raddrehzahl erfasst, verwendet werden. Alternativ dazu kann das Signal eines satellitengestützten Positionsbestimmungssystems zum Ermitteln der Fahrzeuggeschwindigkeit verwendet werden. Anhand dieser Eingangsgrößen kann das Kraftfahrzeug unter Berücksichtigung des Modells manövriert werden.

Bevorzugt wird zum Regeln der Position des Kraftfahrzeugs entlang der Fahrtrajektorie ein Hinterradlenkwinkel auf einen Soll-Hinterradlenkwinkel geregelt. Bei dem Kraftfahrzeug kann der Hinterradlenkwinkel in Abhängigkeit von dem Vorderradlenkwinkel eingestellt werden. Dabei kann der Vorderradlenkwinkel gemessen werden und der Hinterradlenkwinkel auf einen vorbestimmten Sollwert geregelt werden. Somit kann das Kraftfahrzeug zuverlässig manövriert werden.

In einer weiteren Ausführungsform wird der Hinterradlenkwinkel derart geregelt, dass sich ein Drehpunkt, um den sich der zweite Referenzpunkt bei der Bewegung des Kraftfahrzeugs entlang der Fahrtrajektorie dreht, auf einer senkrecht zur Längsachse des Kraftfahrzeugs verlaufenden Linie befindet. Die Lage des Drehpunktes kann sich dabei in Abhängigkeit von der Verschiebung des Referenzpunktes ändern. Auf diese Weise kann der Kurvenradius, entlang dem sich das Kraftfahrzeug bewegen soll, einfach angepasst werden.

Bevorzugt wird der Hinterradlenkwinkel derart geregelt, dass ein Verhältnis von einem Tangens des Vorderradlenkwinkels zu einem Tangens des Hinterradlenkwinkels einem Verhältnis von einer Differenz des Abstands und einem Achsabstand des Kraftfahrzeugs zu dem Abstand entspricht. Mit anderen Worten kann der Hinterradlenkwinkel so eingestellt werden, dass der Quotient des Tangens des Vorderradlenkwinkels und des Tangens des Hinterradlenkwinkels gleich dem Quotienten des Abstands abzüglich des Achsabstands und des Abstands ist. Auf diese Weise kann die Position des Kraftfahrzeugs mithilfe einer einzigen Gleichung geregelt werden.

Bevorzugt wird das Kraftfahrzeug entlang der Fahrtrajektorie semi-autonom manövriert. Hierbei kann es insbesondere vorgesehen sein, dass ein Fahrerassistenzsystem in die Lenkung des Kraftfahrzeugs eingreift und der Fahrer das Gaspedal und das Bremspedal selbst betätigt. Damit kann der Fahrer auf der Fahrt entlang der Fahrtrajektorie unterstützt werden. Beispielsweise kann das Kraftfahrzeug beim Einparken durch die Lenkvorgabe entlang der Fahrtrajektorie bewegt werden.

In einer Ausführungsform wird das Kraftfahrzeug entlang der Fahrtrajektorie autonom manövriert. Hierbei kann es vorgesehen sein, dass der Fahrer das Kraftfahrzeug an einem vorbestimmten Punkt abstellt und das Kraftfahrzeug durch das Fahrerassistenzsystem autonom entlang der Fahrtrajektorie gelenkt wird. Das Fahrerassistenzsystem kann hierbei auch in den Antrieb und die Bremse des Kraftfahrzeugs eingreifen.

Das erfindungsgemäße Fahrerassistenzsystem für ein Kraftfahrzeug, ist dazu ausgelegt, ein erfindungsgemäßes Verfahren durchzuführen. Das Fahrerassistenzsystem kann eine Steuereinrichtung umfassen, die Eingangssignale von den Lenkwinkelsensoren, einem Geschwindigkeitssensor und/oder einem Umfeldsensor empfängt. Anhand dieser Eingangssignale kann ein Steuersignal ermittelt werden, das zur Ansteuerung der Hinterachslenkung dient.

Ein erfindungsgemäßes Kraftfahrzeug umfasst das erfindungsgemäße Fahrerassistenzsystem. Das Kraftfahrzeug ist insbesondere als Personenkraftwagen ausgebildet.

Die in Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweiligen angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:

Fig. 1    in schematischer Darstellung eine Draufsicht auf ein Kraftfahrzeug, welches ein Fahrerassistenzsystem umfasst;

Fig. 2    das Kraftfahrzeug gemäß Fig. 1, wobei ein erster und ein zweiter Referenzpunkt gekennzeichnet sind;

Fig. 3    das Kraftfahrzeug gemäß Fig. 2, wobei ein eine Lage des zweiten Referenzpunktes bezüglich der Vorderradlenkwinkel und der Hinterradlenkwinkel gezeigt ist; und

Fig. 4    eine Bewegung des Kraftfahrzeugs entlang einer Fahrtrajektorie, die mehrere Bahnsegmente umfasst.

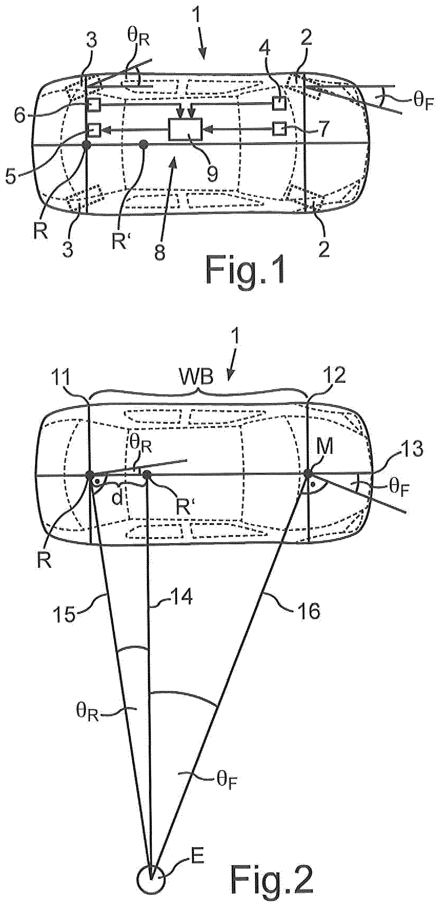

Fig. 1 zeigt ein Kraftfahrzeug gemäß einer Ausführungsform der vorliegenden Erfindung. Das Kraftfahrzeug 1, welches vorliegend als Personenkraftwagen ausgebildet ist, umfasst Vorderräder 2 und Hinterräder 3. Der Vorderradlenkwinkel $\theta_F$ der Vorderräder 2 kann durch einen Lenkeingriff des Fahrers verändert werden. Hierzu betätigt der Fahrer üblicherweise eine Lenkhandhabe bzw. ein Lenkrad. Es ist aber auch denkbar, dass ein Lenkbefehl von einem entsprechenden Sensor erfasst wird und über ein Steuergerät ausschließlich elektrisch zu einem Aktor, der den Lenkbefehl ausführt, weitergeleitet wird (Steer-by-wire). Der Vorderradlenkwinkel $\theta_F$ ist der Winkel zwischen einer aktuellen Radebene eines Vorderrads 2 und einer Geradeauslaufstellung des Vorderrads 2.

Das Kraftfahrzeug 1 ist vorliegend mit einer Hinterachslenkung ausgestattet. Das bedeutet, dass zusätzlich zu den Vorderrädern 2 auch die Hinterräder 3 des Kraftfahrzeugs 1 gelenkt werden können. Dabei kann ein Hinterradlenkwinkel $\theta_R$ der Hinterräder 3 in Abhängigkeit von dem Vorderradlenkwinkel $\theta_F$ der Vorderräder 2 eingestellt werden. Der Hinterradlenkwinkel $\theta_R$ ist der Winkel zwischen einer aktuellen Radebene eines Hinterrads 3 und einer Geradeauslaufstellung des Hinterrads 3.

Der Vorderradlenkwinkel $\theta_F$ kann z. B. mit einem vorderen Lenkwinkelsensor 4 erfasst werden. In Abhängigkeit von dem erfassten Vorderradlenkwinkel $\theta_F$ kann mit einer Stelleinrichtung 5 der Hinterradlenkwinkel $\theta_R$ eingestellt werden. Die Stelleinrichtung 5 kann beispielsweise als elektromechanischer Aktor ausgebildet sein. Zudem umfasst das Kraftfahrzeug 1 einen hinteren Lenkwinkelsensor 6, mit dem der Hinterradlenkwinkel $\theta_R$ erfasst werden kann. Der vordere Lenkwinkelsensor 4 kann beispielsweise in die Lenksäule eingebaut sein und einen Einschlag des Lenkrads messen. Alternativ dazu kann der vordere Lenkwinkelsensor 4 die aktuelle Auslenkung des Vorderrads 2 bezüglich dessen Geradeauslaufstellung ermittelt werden. Mit dem hinteren Lenkwinkelsensor 6 kann die aktuelle Auslenkung des Hinterrads 3 bezüglich dessen Geradeauslaufstellung bestimmt werden.

Die Hinterachslenkung ist derart ausgebildet, dass die Hinterräder 3 gleichläufig zu den Vorderrädern 2 ausgelenkt werden. Beispielsweise kann die Auslenkung der Hinterräder 3 in Abhängigkeit von einer Geschwindigkeit des Kraftfahrzeugs 1 bestimmt werden. Die Geschwindigkeit des Kraftfahrzeugs 1 kann mit einem Geschwindigkeitssensor 7 bestimmt werden. Es kann vorgesehen sein, dass die Hinterräder 3 bei niedrigen Geschwindigkeiten gegensinnig eingelenkt werden. Somit kann die Manövrierfähigkeit des Kraftfahrzeugs 1 - beispielsweise bei Einparkvorgängen - verbessert werden. Bei höheren Fahrzeuggeschwindigkeiten können die Hinterräder 3 gleichsinnig eingelenkt werden. Auf diese Weise kann die Fahrstabilität des Kraftfahrzeugs 1 erhöht werden. Es kann auch vorgesehen sein, dass die Hinterachslenkung zeitweise unterdrückt wird, also die Hinterräder 3 nicht gelenkt werden.

Ferner umfasst das Kraftfahrzeug 1 ein Fahrerassistenzsystem 8. Das Fahrerassistenzsystem 8 umfasst wiederum eine Steuereinrichtung 9. Die Steuereinrichtung 9 ist mit dem vorderen Lenkwinkelsensor 4, dem hinteren Lenkwinkelsensor 6 und dem Geschwindigkeitssensor 7 zur Datenübertragung mit einem Datenkabel bzw. einem Datenbus gekoppelt. Mit der Steuereinrichtung 9 kann die Stelleinrichtung 5 in Abhängigkeit von dem aktuellen Vorderradlenkwinkel $\theta_F$, dem aktuellen Hinterradlenkwinkel $\theta_R$ und/oder der aktuellen Geschwindigkeit des Kraftfahrzeugs 1 angesteuert werden.

Darüber hinaus kann das Kraftfahrzeug 1 bzw. das Fahrerassistenzsystem 8 einen hier nicht dargestellten Umfeldsensor aufweisen, mit dem Umfelddaten des Kraftfahrzeugs 1 bereitgestellt werden können. Als Umfeldsensor können beispielsweise eine oder mehrere Kameras vorgesehen sein, die an der Außenseite des Kraftfahrzeugs 1 angeordnet sind. Mit einer solchen Kamera kann eine Bildsequenz des Umfelds bzw. des Umgebungsbereichs des Kraftfahrzeugs 1 bereitgestellt werden. Darüber hinaus können als Umfeldsensor ein Ultraschallsensor, ein LiDAR, ein Laserscanner und/oder ein Radarsensor verwendet werden. Die Umfelddaten können zudem an die Steuereinrichtung 9 übertragen und von der Steuereinrichtung 9 ausgewertet werden. Anhand der Auswertung können Objekte im Umfeld des Kraftfahrzeugs 1 erkannt werden. Beispielsweise kann ein Hindernis erkannt werden. Alternativ oder zusätzlich kann ein freier Parkplatz für das Kraftfahrzeug 1 erkannt werden.

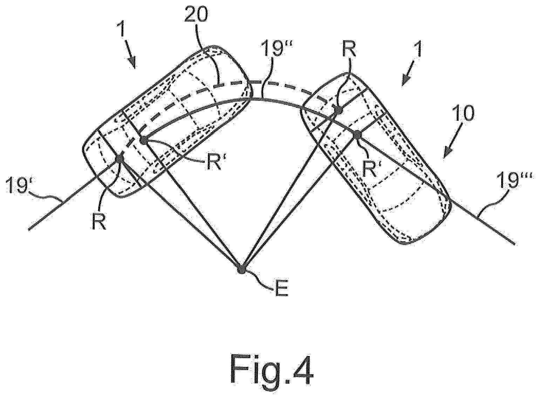

Eine Position des Kraftfahrzeugs 1 soll nun geregelt werden. Die Regelung der Position des Kraftfahrzeugs 1 kann insbesondere zur Bahnplanung erfolgen. Die Bahnplanung kann zum Einparken des Kraftfahrzeugs 1 in eine Parklücke, zum Manövrieren des Kraftfahrzeugs 1 zwischen Hindernissen und/oder zum Rangieren verwendet werden. Zur Regelung der Position des Kraftfahrzeugs 1 wird - wie nachfolgend im Zusammenhang mit Fig. 4 näher erläutert - eine Fahrtrajektorie 10 bestimmt, entlang der das Kraftfahrzeug 1 bewegt werden soll. Des Weiteren wird ein Modell bestimmt, welches die Bewegung des Kraftfahrzeugs 1 beschreibt. In dem Modell können die Außenabmessungen des Kraftfahrzeugs 1 hinterlegt sein. Zudem kann das Modell den Zusammenhang zwischen der Geschwindigkeit des Kraftfahrzeugs 1 und der Querdynamik sowie die Längsdynamik umfassen. In dem Modell wird vorliegend nur der Einfluss des Vorderradlenkwinkels $\theta_F$ berücksichtigt. Auch hierbei kann das Modell den Zusammenhang zwischen dem Vorderradlenkwinkels $\theta_F$ und der Querdynamik sowie die Längsdynamik beschreiben. Der Einfluss des Hinterradlenkwinkels $\theta_R$ wird in dem Modell nicht berücksichtigt. Das Modell kann beispielsweise das lineare Einspurmodell sein. Das Modell kann in einem Speicher der Steuereinrichtung 9 hinterlegt bzw. gespeichert sein. Somit kann das Modell bei der Ansteuerung der Stellenrichtung 5 mittels der Steuereinrichtung 9 verwendet werden. Wie in Fig. 2 gezeigt, wird das Modell anhand eines ersten Referenzpunktes R ermittelt. Der erste Referenzpunkt R befindet sich mittig auf der Hinterachse 11 des Kraftfahrzeugs 1. Der erste Referenzpunkt R entspricht also einem Schnittpunkt zwischen Hinterachse 11 und einer Längsachse 13 des Kraftfahrzeugs 1. Das Modell, das in Abhängigkeit von dem ersten Referenzpunkt R bestimmt ist, kann für Kraftfahrzeuge verwendet werden, die nur eine Vorderachslenkung aufweisen. Um dieses Modell auf für das Kraftfahrzeug 1 mit der Hinterachslenkung verwenden zu können, wird ein zweiter Referenzpunkt R' ermittelt. Der zweite Referenzpunkt R' wird durch Verschieben des ersten Referenzpunktes R entlang der Längsachse 13 des Kraftfahrzeugs 1 bestimmt. Der zweite Referenzpunkt R' weist zum ersten Referenzpunkt R einen Abstand d auf.

Dabei wird der zweite Referenzpunkt R' insbesondere so bestimmt, dass sich ein Drehpunkt E, um den sich das Kraftfahrzeug 1 bei der Bewegung entlang der Fahrtrajektorie 10 dreht, auf einer Linie 14 befindet, die senkrecht zur Längsachse 13 verläuft und auf der sich der zweite Referenzpunkt R' befindet. Ein Winkel zwischen der Linie 14 und einer Linie 15, die den Drehpunkt E mit dem ersten Referenzpunkt R verbindet, entspricht dem Hinterradlenkwinkel $\Theta_R$. Ein Winkel zwischen der Linie 14 und einer Linie 16, die den Drehpunkt E mit einem Mittelpunkt M der Vorderachse 12 verbindet, entspricht dem Vorderradlenkwinkel $\Theta_F$. Bevorzugt wird der Referenzpunkt R' so festgelegt, dass folgende Gleichung erfüllt ist:

$$\frac{\tan\theta_F}{\tan\theta_R} = \frac{d - WB}{d},$$

wobei WB die Achslänge des Kraftfahrzeugs 1, also der Abstand zwischen Vorderachse 12 und Hinterachse 11, ist.

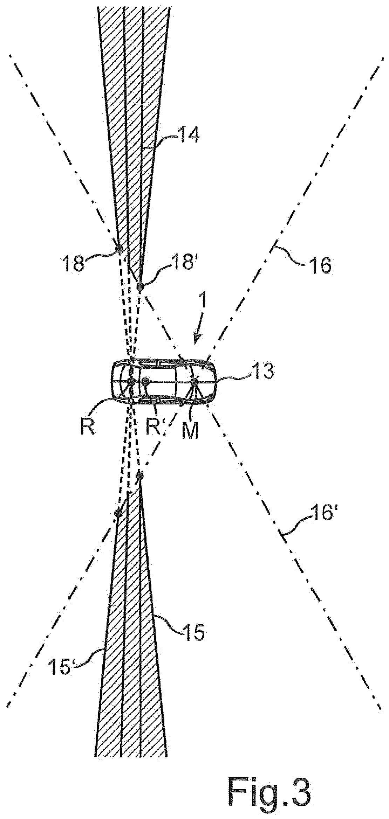

In Fig. 3 ist die Bestimmung des Abstands d zwischen dem ersten Referenzpunkt R und dem zweiten Referenzpunkt R' verdeutlicht. Der Abstand d wird in Abhängigkeit von maximal möglichen Vorderradlenkwinkeln $\theta_F$ und von maximal möglichen Hinterradlenkwinkeln $\theta_R$ bestimmt. Dabei beschreibt die Linie 16 den maximalen Vorderradlenkwinkel $\theta_F$ für eine erste Einschlagrichtung und die Linie 16' den maximalen Vorderradlenkwinkel $\theta_F$ für eine zweite Einschlagrichtung. Die Linien 16 und 16' verlaufen dabei durch den Mittelpunkt M auf der Vorderachse 12. Ferner beschreibt die Linie 15 den maximalen Hinterradlenkwinkel $\theta_R$ für eine erste Einschlagrichtung und die Linie 15' den maximalen Hinterradlenkwinkel $\theta_R$ für eine zweite Einschlagrichtung. Die Linien 15 und 15' verlaufen dabei durch den Mittelpunkt der Hinterachse 11 bzw. den ersten Referenzpunkt R. Die Linie 15 und die Linie 16 schneidet sich in dem Schnittpunkt 17, die Linie 15' und die Linie 16 schneidet sich in dem Schnittpunkt 17', die Linie 15 und die Linie 16' schneidet sich in dem Schnittpunkt 18 und die Linie 15 und die Linie 16 schneidet sich in dem Schnittpunkt 17.

Die Linie 14, die senkrecht zur Längsachse 13 verläuft und die den zweiten Referenzpunkt R' definiert, kann zwischen den Schnittpunkten 17' und 17 bzw. 18 und 18' parallel verschoben werden. Somit wird ein Bereich definiert, in dem sich der zweite Referenzpunkt R' befinden kann. Dieser Bereich ist in Fig. 3 schraffiert dargestellt. Befindet sich der zweite Referenzpunkt R' entlang der Fahrtrichtung vor dem ersten Referenzpunkt R, wird die Hinterachslenkung gegensinnig zu der Vorderachslenkung betreiben. Wenn sich der zweite Referenzpunkt R' entlang der Fahrtrichtung hinter dem ersten Referenzpunkt R befindet, wird die Hinterachslenkung gleichsinnig zu der Vorderachslenkung betreiben. Bei deaktivierter Hinterachslenkung befindet sich der zweite Referenzpunkt R' auf dem ersten Referenzpunkt R. Hierbei wird berücksichtigt, dass sich die Achslänge WB bzw. der Radstand des Kraftfahrzeugs 1 bei gegensinniger Lenkung der Vorderräder 2 und der Hinterräder 3 virtuell verkürzt und bei gleichsinniger Lenkung der Vorderräder 2 und der Hinterräder 3 virtuell verlängert.

Im Zusammenhang mit Fig. 4 ist gezeigt, wie die Fahrtrajektorie 10, anhand der die Position des Kraftfahrzeugs 1 geregelt wird, bereitgestellt wird. Hierzu wird ein Zielpunkt für das Kraftfahrzeug vorgegeben. Der Zielpunkt kann beispielsweise eine freie Parklücke sein, in die das Kraftfahrzeug 1 eingeparkt werden soll. Die Fahrtrajektorie 10 verbindet einen Startpunkt, der beispielsweise die aktuelle Position des Kraftfahrzeugs 1 sein kann, mit dem Zielpunkt. Die Fahrtrajektorie 10 wird in mehrere Abschnitte eingeteilt. Vorliegend ist die Fahrtrajektorie 10 in drei Abschnitte eingeteilt. Die Einteilung kann dabei in Abhängigkeit der Formgebung der Fahrtrajektorie 10 erfolgen. So können Bereiche der Fahrtrajektorie 10, die im Wesentlichen die gleiche Formgebung aufweisen, jeweils einen Abschnitt bilden.

Für jeden der Abschnitte wird der Abstand d ermittelt, um den der zweite Referenzpunkt R' zu dem ersten Referenzpunkt R verschoben wird. Anhand des Abstands d bzw. in Abhängigkeit von dem zweiten Referenzpunkt R' wird für den jeweiligen Abschnitt ein Bahnsegmente 19, 19', 19" bestimmt. Dabei ist der Abstand d für das jeweilige Bahnsegment 19, 19', 19" bevorzugt konstant. Die Bahnsegmente 19, 19', 19" können dabei insbesondere so festgelegt werden, dass diese die Form einer Geraden, eines Kreisbogens, einer Ellipsenbahn und/oder einer Klothoide aufweisen.

Vorliegend weist das erste Bahnsegment 19 im Wesentlichen die Form einer Geraden auf. Zum Bewegen des Kraftfahrzeugs 1 entlang dieses geraden Bahnsegments 19 werden weder die Vorderräder 2 noch die Hinterräder 3 eingeschlagen. Der Vorderradlenkwinkel $\theta_F$ und der Hinterradlenkwinkel $\theta_R$ weisen im Wesentlichen den Wert Null auf. In diesem Fall weist auch der Abstand d den Wert Null auf. Das zweite Bahnsegment 19' weist im Wesentlichen die Form eines Kreisbogens auf. Hierbei wird der zweite Referenzpunkt R' in Fahrtrichtung des Kraftfahrzeugs 1 zu dem ersten Referenzpunkt R verschoben. Der Abstand d kann beispielsweise einige Zentimeter oder einigen Dezimeter betragen. Auf diese Weise wird mit dem Kraftfahrzeugs 1 im Vergleich zu dem Fall, in der erste Referenzpunkt R berücksichtigt wird, ein engerer Kurvenradius gefahren. Der Grund hierfür ist, dass durch die Verschiebung des Referenzpunktes bzw. durch das Breitstellen des zweiten Referenzpunktes R' der Abstand von dem zweiten Referenzpunkt R' zu dem Drehpunkt E verkürzt. Die gestrichelte Linie 20 verdeutlicht den Kurvenverlauf, für den Fall, dass der erste Referenzpunkt R berücksichtigt wird. Anschließend wird die Fahrt des Kraftfahrzeugs auf dem dritten Bahnsegment 19''' fortgeführt.

Zur Regelung der Position des Kraftfahrzeugs 1 wird für jedes der Bahnsegmente 19, 19', 19" der Abstand d ermittelt. Der Achsabstand WB des Kraftfahrzeugs 1 ist bekannt und kann in einer Speichereinheit der Steuereinrichtung 9 hinterlegt sein. Der Vorderradlenkwinkel $\theta_F$ kann mit dem vorderen Lenkwinkelsensor 4 kontinuierlich ermittelt werden. Bei Bewegen des Kraftfahrzeugs 1 auf dem jeweiligen Bahnsegment 19, 19', 19" kann der Hinterradlenkwinkel $\theta_R$ auf einen vorbestimmten Soll-Hinterradlenkwinkel geregelt werden. Der Soll-Hinterradlenkwinkel kann dabei so gewählt werden, dass die oben beschriebene Gleichung erfüllt ist. Somit kann anhand einer einzigen Gleichung die Position es Kraftfahrzeugs 1 geregelt werden.

**Patentansprüche**

1. Verfahren zur Regelung einer Position eines Kraftfahrzeugs (1) mit einer Hinterachslenkung, mit den Schritten:

   - Vorgegeben einer Fahrtrajektorie (10) für das Kraftfahrzeug (1),
   - Bereitstellen eines ersten Referenzpunktes (R) des Kraftfahrzeugs (1), welcher sich mittig auf einer Hinterachse (11) des Kraftfahrzeugs (1) befindet,
   - Bereitstellen eines Modells, welches eine Bewegung des Kraftfahrzeugs (1) in Abhängigkeit von einem Vorderradlenkwinkel ($\theta_F$) der Vorderräder (2) des Kraftfahrzeugs (1) unter Verwendung des ersten Referenzpunktes (R) beschreibt,
   - Bestimmen eines zweiten Referenzpunktes (R') durch Verschieben des ersten Referenzpunktes (R') um einen Abstand (d), und
   - Regeln der Position des Kraftfahrzeugs (1) entlang der Fahrtrajektorie (10) unter Verwendung des Modells für den zweiten Referenzpunkt (R'),

   wobei die Hinterräder (3) gleichsinnig zu den Vorderrädern (2) eingelenkt werden, wobei das Modell ein lineares Einspurmodell ist.

2. Verfahren nach Anspruch 1,
   **dadurch gekennzeichnet, dass**
   der zweite Referenzpunkt (R') durch Verschieben des ersten Referenzpunktes (R) entlang einer Längsachse (13) des Kraftfahrzeugs (1) bestimmt wird.

3. Verfahren nach einem der vorhergehenden Ansprüche,
   **dadurch gekennzeichnet, dass**
   der Abstand (d) des zweiten Referenzpunktes (R') zu dem ersten Referenzpunkt (R) in Abhängigkeit von maximalen Hinterradlenkwinkeln ($\theta_R$) der Hinterräder (3) des Kraftfahrzeugs (1) bestimmt wird.

4. Verfahren nach Anspruch 3,
   **dadurch gekennzeichnet, dass**
   der Abstand (d) des zweiten Referenzpunktes (R') zu dem ersten Referenzpunkt (R) zusätzlich in Abhängigkeit von maximalen Vorderradlenkwinkeln ($\theta_F$) der Vorderräder (2) des Kraftfahrzeugs (1) bestimmt wird.

5. Verfahren nach Anspruch 3 oder 4,
   **dadurch gekennzeichnet, dass**
   der Abstand (d) des zweiten Referenzpunktes (R') zu dem ersten Referenzpunkt (R) anhand eines Schnittpunktes einer Linie (14) mit der Längsachse (13) des Kraftfahrzeugs (1) bestimmt wird, wobei die Line (14) durch Schnittpunkte (17, 17', 18, 18') von Geraden (16, 16'), welche die maximalen Vorderradlenkwinkel ($\theta_F$) beschreiben und welche durch einen Mittelpunkt (M) der Vorderachse (12) des Kraftfahrzeugs (1) verlaufen, und Geraden (15, 15'), welche die maximalen Hinterradlenkwinkel ($\theta_R$) beschreiben und welche durch den ersten Referenzpunkt (R) verlaufen, bestimmt wird.

6. Verfahren nach einem der vorhergehenden Ansprüche,
   **dadurch gekennzeichnet, dass**
   die Fahrtrajektorie (10) in eine Mehrzahl von Bereichen eingeteilt wird, für jeden Bereich der Mehrzahl von Bereichen der Abstand (d) von dem zweiten Referenzpunkt (R') zu dem ersten Referenzpunkt (R) ermittelt wird und für jeden Bereich anhand des ermittelten Abstands (d) ein Bahnsegment (19', 19", 19''') bestimmt wird.

7. Verfahren nach Anspruch 6,
   **dadurch gekennzeichnet, dass**
   das jeweilige Bahnsegment (19', 19", 19''') derart bestimmt wird, dass dieses eine Form einer Geraden, eines Kreisbogens, einer Ellipsenbahn und/oder einer Klothoide aufweist.

8. Verfahren nach einem der vorhergehenden Ansprüche,
   **dadurch gekennzeichnet, dass**

zum Regeln der Position des Kraftfahrzeugs (1) entlang der Fahrtrajektorie (10) der aktuelle Vorderradlenkwinkel ($\theta_R$), der aktuelle Hinterradlenkwinkel ($\theta_R$) und/oder eine aktuelle Geschwindigkeit des Kraftfahrzeugs (1) erfasst werden.

9. Verfahren nach einem der vorhergehenden Ansprüche,
**dadurch gekennzeichnet, dass**
zum Regeln der Position des Kraftfahrzeugs (1) entlang der Fahrtrajektorie (10) ein Hinterradlenkwinkel ($\theta_R$) auf einen Soll-Hinterradlenkwinkel geregelt wird.

10. Verfahren nach Anspruch 9,
**dadurch gekennzeichnet, dass**
der Hinterradlenkwinkel ($\theta_R$) derart geregelt wird, dass sich ein Drehpunkt (E), um den sich der zweite Referenzpunkt (R') bei der Bewegung des Kraftfahrzeugs (1) entlang der Fahrtrajektorie (10) dreht, auf einer senkrecht zur Längsachse (13) des Kraftfahrzeugs (1) verlaufenden Linie (14) befindet.

11. Verfahren nach Anspruch 9 oder 10,
**dadurch gekennzeichnet, dass**
der Hinterradlenkwinkel ($\theta_R$) derart geregelt wird, dass ein Verhältnis von einem Tangens des Vorderradlenkwinkels ($\theta_F$) zu einem Tangens des Hinterradlenkwinkels ($\theta_R$) einem Verhältnis von einer Differenz des Abstands (d) und einem Achsabstand (WB) des Kraftfahrzeugs (1) zu dem Abstand (d) entspricht.

12. Verfahren nach einem der vorhergehenden Ansprüche,
**dadurch gekennzeichnet, dass**
das Kraftfahrzeug (1) entlang der Fahrtrajektorie (10) semi-autonom manövriert wird.

13. Verfahren nach einem der vorhergehenden Ansprüche,
**dadurch gekennzeichnet, dass**
das Kraftfahrzeug (1) entlang der Fahrtrajektorie (10) autonom manövriert wird.

14. Fahrerassistenzsystem (8) für ein Kraftfahrzeug (1), welche dazu ausgelegt ist, ein Verfahren nach einem der vorhergehenden Ansprüche durchzuführen.

15. Kraftfahrzeug (1) mit einem Fahrerassistenzsystem (9) nach Anspruch 14.

**Claims**

1. Method for controlling a position of a motor vehicle (1) having rear axle steering, comprising the steps:

- predefining a travel trajectory (10) for the motor vehicle (1),
- providing a first reference point (R) of the motor vehicle (1), which reference point (R) is located centrally on a rear axle (11) of the motor vehicle (1),
- providing a model which describes a movement of the motor vehicle (1) as a function of a front wheel steering angle ($\theta_F$) of the front wheels (2) of the motor vehicle (1) using the first reference point (R),
- determining a second reference point (R') by shifting the first reference point (R') by a distance (d), and
- controlling the position of the motor vehicle (1) along the travel trajectory (10) using the model for the second reference point (R'),

wherein the rear wheels (3) are deflected in the same direction as the front wheels (2), wherein the model is a linear single-track model.

2. Method according to Claim 1, **characterized in that** the second reference point (R') is determined by a shift in the first reference point (R) along a longitudinal axis (13) of the motor vehicle (1).

3. Method according to one of the preceding claims, **characterized in that** the distance (d) of the second reference point (R') from the first reference point (R) is determined as a function of maximum rear wheel steering angles ($\theta_R$) of the rear wheels (3) of the motor vehicle (1).

4. Method according to Claim 3, **characterized in that** the distance (d) of the second reference point (R') from the first reference point (R) is additionally determined as a function of maximum front wheel steering angles ($\theta_F$) of the front wheels (2) of the motor vehicle (1).

5. Method according to Claim 3 or 4, **characterized in that** the distance (d) of the second reference point (R') from the first reference point (R) is determined on the basis of an intersection point of a line (14) with the longitudinal axis (13) of the motor vehicle (1), wherein the line (14) is determined by intersection points (17, 17', 18, 18') of straight lines (16, 16') which describe the maximum front wheel steering angles ($\theta_F$) and which run through a centre point (M) of the front axle (12) of the motor vehicle (1), and straight lines (15, 15') which describe the maximum rear wheel steering angles ($\theta_R$) and which run through the first reference point (R).

6. Method according to one of the preceding claims,

**characterized in that**
the travel trajectory (10) is divided into a multiplicity of regions, and the distance (d) of the second reference point (R') from the first reference point (R) is determined for each region of the multiplicity of regions, and a path segment (19', 19", 19''') is determined for each region on the basis of the determined distance (d).

7. Method according to Claim 6,
**characterized in that**
the respective path segment (19', 19", 19''') is determined in such a way that it is in the shape of a straight line, an arc, an elliptical path and/or a clothoid.

8. Method according to one of the preceding claims,
**characterized in that**,
in order to control the position of the motor vehicle (1) along the travel trajectory (10) the current front wheel steering angle ($\theta_R$), the current rear wheel steering angle ($\theta_R$) and/or a current speed of the motor vehicle (1) are sensed.

9. Method according to one of the preceding claims,
**characterized in that**
in order to control the position of the motor vehicle (1) along the travel trajectory (10) a rear wheel steering angle ($\theta_R$) is adjusted to a set point rear wheel steering angle.

10. Method according to Claim 9,
**characterized in that**
the rear wheel steering angle ($\theta_R$) is controlled in such a way that a centre of rotation (E), about which the second reference point (R') rotates during the movement of the motor vehicle (1) along the travel trajectory (10), is located on a line (14) running perpendicularly with respect to the longitudinal axis (13) of the motor vehicle.

11. Method according to Claim 9 or 10,
**characterized in that**
the rear wheel steering angle ($\theta_R$) is controlled in such a way that a ratio of a tangent of the front wheel steering angle ($\theta_F$) with respect to a tangent of the rear wheel steering angle ($\theta_R$) corresponds to a ratio of a difference of the distance (d) and a wheelbase (WB) of the motor vehicle (1) with respect to the distance (d).

12. Method according to one of the preceding claims,
**characterized in that**
the motor vehicle (1) is manoeuvred semi-autonomously along the travel trajectory (10).

13. Method according to one of the preceding claims,
**characterized in that**
the motor vehicle (1) is manoeuvred autonomously along the travel trajectory (10).

14. Driver assistance system (8) for a motor vehicle (1), which is configured to carry out a method according to one of the preceding claims.

15. Motor vehicle (1) having a driver assistance system (9) according to Claim 14.

**Revendications**

1. Procédé de régulation de la position d'un véhicule automobile (1) présentant un essieu arrière directeur, le procédé comportant les étapes suivantes :

définition d'une trajectoire de déplacement (10) pour le véhicule (1),
préparation d'un premier point de référence (R) du véhicule automobile (1), qui se situe au milieu de l'essieu arrière (11) du véhicule automobile (1),
préparation d'un modèle qui décrit le déplacement du véhicule automobile (1) en fonction d'un angle ($\theta_F$) de braquage des roues avant (2) du véhicule automobile (1), en recourant au premier point de référence (R),
définition d'un deuxième point de référence (R') par déplacement du premier point de référence (R) sur une distance (d) et
régulation de la position du véhicule automobile (1) suivant la trajectoire de déplacement (10) en recourant au modèle pour le deuxième point de référence (R'),
les roues arrière (3) étant braquées dans le même sens que les roues avant (2), le modèle étant un modèle linéaire à trace unique.

2. Procédé selon la revendication 1, **caractérisé en ce que** le deuxième point de référence (R') est défini par déplacement du premier point de référence (R) suivant un axe longitudinal (13) du véhicule automobile (1).

3. Procédé selon l'une des revendications précédentes, **caractérisé en ce que** la distance (d) entre le deuxième point de référence (R') et le premier point de référence (R) est définie en fonction d'angles maximum ($\theta_R$) de braquage des roues arrière (3) du véhicule automobile (1).

4. Procédé selon la revendication 3, **caractérisé en ce que** la distance (d) entre le deuxième point de référence (R') et le premier point de référence (R) est en outre définie en fonction des angles maximum ($\theta_F$) de braquage des roues avant (2) du véhicule automobile (1).

**5.** Procédé selon les revendications 3 ou 4, **caractérisé en ce que** la distance (d) entre le deuxième point de référence (R') et le premier point de référence (R) est définie à l'aide du point d'intersection d'une ligne (14) avec l'axe longitudinal (13) du véhicule automobile (1), la ligne (14) étant définie par des points d'intersection (17, 17', 18, 18') de droites (16, 16') qui décrivent les angles maximum ($\theta_F$) de braquage des roues avant et qui passent par un point central (M) de l'essieu avant (12) du véhicule automobile (1) et des droites (15, 15') qui décrivent les angles maximum ($\theta_R$) de braquage des roues arrière et qui passent par le premier point de référence (R).

**6.** Procédé selon l'une des revendications précédentes, **caractérisé en ce que** la trajectoire de déplacement (10) est divisée en plusieurs plages, la distance (d) entre le deuxième point de référence (R') et le premier point de référence (R) étant déterminée pour chacune des différentes plages et un segment de piste (19', 19'', 19''') est défini pour chaque plage à l'aide de la distance (d) qui a été déterminée.

**7.** Procédé selon la revendication 6, **caractérisé en ce que** chaque segment de piste (19', 19'', 19''') est définie de manière à présenter la forme d'une droite, d'un arc de cercle, d'une piste elliptique et/ou d'une clothoïde.

**8.** Procédé selon l'une des revendications précédentes, **caractérisé en ce que** pour réguler la position du véhicule automobile (1) le long de la trajectoire de déplacement (10), l'angle de braquage effectif ($\theta_R$) des roues avant, l'angle de braquage effectif ($\theta_R$) des roues arrière et/ou la vitesse effective du véhicule automobile (1) étant saisis.

**9.** Procédé selon l'une des revendications précédentes, **caractérisé en ce que** pour réguler la position du véhicule automobile (1) le long de la trajectoire de déplacement (10), un angle de braquage ($\theta_R$) des roues arrière est régulé à un angle de braquage de consigne des roues arrière.

**10.** Procédé selon la revendication 9, **caractérisé en ce que** l'angle de braquage ($\theta_R$) des roues arrière est régulé de telle sorte que le centre de rotation (E) autour duquel le deuxième point de référence (R') tourne lors du déplacement du véhicule automobile (1) le long de la trajectoire de déplacement (10) est situé sur une ligne (14) perpendiculaire à l'axe longitudinal (13) du véhicule automobile (1).

**11.** Procédé selon les revendications 9 ou 10, **caractérisé en ce que** l'angle ($\theta_R$) de braquage des roues arrière est régulé de telle sorte que le rapport entre la tangente de l'angle de braquage ($\theta_F$) des roues avant et la tangente de l'angle de braquage ($\theta_R$) des roues arrière correspond à un rapport entre la différence de la distance (2) et l'écart entre essieux (WB) du véhicule automobile (1) et la distance (d).

**12.** Procédé selon l'une des revendications précédentes, **caractérisé en ce que** le véhicule automobile (1) est manoeuvré de manière semi-autonome le long de la trajectoire de déplacement (10).

**13.** Procédé selon l'une des revendications précédentes, **caractérisé en ce que** le véhicule automobile (1) est manoeuvré de manière autonome le long de la trajectoire de déplacement (10).

**14.** Système (8) d'assistance au conducteur d'un véhicule automobile (1), conçu pour exécuter un procédé selon l'une des revendications précédentes.

**15.** Véhicule automobile (1) doté d'un système (9) d'assistance au conducteur selon la revendication 14.

# Fig.1

# Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013010306 A1
- DE 102011010370 A1
- EP 0678439 A1
- EP 2243687 A1